# EUROPEAN PATENT SPECIFICATION

(11) **EP 2 017 302 B1**
(45) Date of publication and mention of the grant of the patent: **20.10.2010**
(21) Application number: 07252840.9
(22) Date of filing: 18.07.2007
(51) Int. Cl.: C08L 23/06, C08L 23/08

(54) **Moulded article comprising high density polyethylene copolymer**
Formartikel mit Polyethylen-Copolymer von hoher Dichte
Article moulé comprenant un copolymère de polyéthylène haute densité

(43) Date of publication of application: 21.01.2009
(73) Proprietor: Borealis Technology Oy, 06101 Porvoo (FI)
(72) Inventor: Nord-Varhaug, Katrin, 3942 Porsgrunn (NO); Helland Irene, 3912 Porsgrunn (NO); Fredriksen Siw B., 3744 Skien (NO)
(74) Representative: Campbell, Neil Boyd

(56) References cited:
- EP-A- 1 146 077
- EP-A- 1 790 580
- EP-A- 1 878 764
- WO-A-01/14122
- WO-A-2006/027227
- WO-A-2007/117520
- US-A1- 2005 004 315
- US-B1- 6 545 093

## Description

This invention relates to injection moulded or compression moulded articles comprising a multimodal high density ethylene hexene copolymer (from hereon referred to as HDPE), to the use of the high density ethylene hexene copolymer in injection or compression moulding and to specific articles e.g. caps and closures formed from the HDPE.

HDPE is widely used in the manufacture of articles for a range of applications (e.g. pipes, films, containers). For many applications of HDPE's there is a requirement for high environmental stress cracking resistance, high impact strengths and high tensile properties. In particular, for screw caps, which are often under significant internal pressure from the carbon dioxide build up within a bottle for example, the properties are vital.

As ever processability is also vital. A polymer which has wonderful mechanical properties but which cannot be extruded and moulded is of little value. The polymer chemist is constantly striving therefore to achieve an optimum balance of these properties.

As is typical in the polymer field however, certain properties are intrinsically linked and improvements in one property tend to lead to a reduction in another. Thus, for a polymer of the same viscosity, increasing ESCR is typically associated with a reduction in tensile properties. The skilled person is therefore looking to maximise these properties.

Various solutions to this problem are set out in the art. WO00/71615 notes that unimodal HDPE's exhibit poor ESCR properties but concludes that these can be improved if multimodal polymers are used instead. The examples of this document suggest therefore the use of a multimodal high density ethylene butene copolymer as being suitable for the formation of injection moulded articles such as caps and closures.

In US2001/0014724, the inventors suggest the use of certain multimodal HDPE's to improve ESCR in pipe applications or blow moulding applications. The polymers in question are high density ethylene hexene polymers made in a series of reactors and allegedly represent an excellent balance between mechanical and processing properties.

WO03/039984 notes that multimodal HDPE's are useful for the manufacture of screw caps and can provide a good balance of ESCR and impact resistance however the polymers exemplified and preferred in this document are high density ethylene butene copolymers.

As noted above therefore, the majority of the high density multimodal polymers of the prior art are formed from an ethylene homopolymer component combined with an ethylene butene copolymer component. The present inventors have surprisingly found that should the second component be an ethylene hexene copolymer, the improvements in ESCR and impact properties relative to an ethylene butene based HDPE's are incredible.

There would however still be the concern of the skilled man that the use of hexene as opposed to butene would damage processability and have a detrimental effect on the taste and odour of the material. Surprisingly, the inventors have found that for injection and compression moulding, the processability of the materials is as good as that of a multimodal high density ethylene butene copolymer making multimodal high density ethylene hexene copolymers ideal for use in the manufacture of injection moulded articles. Moreover, the organoleptic properties of the materials are also unaffected despite the use of the higher olefin.

Thus, viewed from one aspect the invention provides an injection moulded or compression moulded article comprising a multimodal high density ethylene hexene copolymer (HDPE) containing at least a lower molecular weight (LMW) polyethylene homopolymer component and a higher molecular weight (HMW) ethylene hexene copolymer component;
wherein said HDPE has a MFR₂ of 0.1 to 20 g/10min when determined according to ISO 1133 at 190°C at load of 2.16 kg;
a density of 945 to 975 kg/m³;
a tensile modulus of at least 850 MPa; and
an ESCR-B of at least 300h.

Viewed from another aspect the invention provides a cap or closure, especially a screw cap, comprising the HDPE as hereinbefore defined.

Viewed from another aspect the invention provides the use of the HDPE of the invention in injection or compression moulding.

Viewed from another aspect the invention provides a multimodal high density ethylene hexene copolymer (HDPE) containing at least a lower molecular weight (LMW) polyethylene homopolymer component having an MFR₂ of at least 50 g/10min and a higher molecular weight (HMW) ethylene hexene copolymer component;

wherein said HDPE has a MFR₂ of 0.5 to 2.0 g/10min when determined according to ISO 1133 at 190°C at load of 2.16 kg and a density of 955 to 958 kg/m³.

The present inventors have surprisingly found that the multimodal HDPE of the invention results in very high ESCR, impact and tensile properties. Moreover, these properties are achieved without loss of processability or affecting organoleptic properties. It is also a highly preferred embodiment that the HDPE of the invention contains a very limited amount of hexene. By increasing the density of the HDPE to particularly high levels and thus reducing the level of hexene comonomer, the skilled man would anticipate the differences between high density ethylene butene copolymers to be less marked than with the high density ethylene hexene copolymers. This is not observed however and despite the high density and hence lower hexene content the improvement in tensile and in particular ESCR is remarkable, e.g. at least 50%.

The HDPE polymer as hereinbefore defined can be prepared by blending the LMW and HMW components, mechanically together or by blending of at least LMW and HMW components of said HDPE composition in-situ during the preparation process thereof. The latter route is preferred.

Usually, a HDPE polymer comprising at least two polyethylene fractions, which have been produced under different polymerisation conditions resulting in different (weight average) molecular weights and molecular weight distributions for the fractions, is referred to as "multimodal". Accordingly, the polymers of the composition of the invention are multimodal polyethylenes. The prefix "multi" relates to the number of different polymer fractions present in the polymer. Thus, for example, a polymer consisting of two fractions only is called "bimodal". The form of the molecular weight distribution curve, i.e. the appearance of the graph of the polymer weight fraction as function of its molecular weight, of a multimodal polyethylene will show two or more maxima or at least be distinctly broadened in comparison with the curves for the individual fractions. For example, if a polymer is produced in a sequential multistage process, utilising reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions are superimposed into the molecular weight distribution curve for the total resulting polymer product, usually yielding a curve with two or more distinct maxima or at least be distinctly broadened in comparison with the curves for the individual fractions.

In any multimodal polymer there is by definition a lower molecular weight component (LMW) and a higher molecular weight component (HMW). The LMW component has a lower molecular weight than the higher molecular weight component.

In the HDPE polymer of the invention, the lower molecular weight (LMW) component is an ethylene homopolymer. The higher molecular weight (HMW) component is an ethylene hexene copolymer. Preferably these two components only are present and the polymer is thus bimodal.

The term "ethylene hexene copolymer" as used herein is intended to encompass polymers comprising repeat units deriving from ethylene, hexene and optionally at least one other monomer. The amount of the hexene present in the copolymer is typically at least 0.25 wt%, preferably at least 0.5 wt-%, such as up to 10 wt%. Preferably the amount of hexene present is less than 8 wt%. Ethylene forms the majority of the copolymer and hexene is preferably the only comonomer present.

In contrast the term "ethylene homopolymer" as used herein is intended to encompass polymers which consist essentially of repeat units deriving from ethylene. Homopolymers may, for example, comprise at least 99.8 %, preferably at least 99.9 %, by weight of repeat units deriving from ethylene.

The HDPE of the invention has a density of 945 to 975 kg/m³, e.g. 951 to 960 kg/m³, preferably 954-958 kg/m³, preferably in the range of from 955 to 957 kg/m³.

The HDPE polymer typically has a MFR₂ of 0.1 to 20 g/10min, e.g. 0.2. to 10 g/10min, preferably 0.5 to 2.0 g/10 min, preferably 1.0 to 1.5 g/10 min, especially 1.1 to 1.4 g/10min as measured according to ISO 1133 at 190°C and under 2.16 kg load.

FRR21/2 (The Flow Rate ratio of MFR values measured by ISO 1133 at 190°C and under 21.6 kg and 2.16 kg loads, MFR_{21.6}/MFR_{2.16}) is typically more than 10, the upper limit being e.g. less than 200. Preferably FRR21.6/2.16 is between 50 and 150, e.g. of 70 to 100.

The HDPE polymer of the invention preferably possesses a broad molecular weight distribution. This can be expressed using the rheological behaviour which can be described with a certain level of SHI(1/100). The SHI also indicates the good processability of the HDPE.

The HDPE polymer of the HDPE composition should have an SHI(1/100) of 4 to 25, preferably 5 to 20, especially 7 to 15. The processability of the HDPE polymers of the invention can also be measured in the light of the spiral test properties. Spiral test (600 bar) values are preferably 20 to 50 cm, more preferably 23-47 cm, especially 25 to 45 cm.

Spiral test (1000 bar) values are preferably 30 to 70, more preferably 33 to 65 cm, especially 35-60 cm.

Spiral test (1400 bar) values are preferably 40 to 90 cm, more preferably 43-80 cm, especially 45 to 75 cm. The spiral text protocols are given in the examples section below.

The use of the higher olefin hexene as opposed to butene might also be expected to have a negative affect on the processability of the polymers. Again however this is not observed and the processability remains good. The processability of hexene based HDPE's is essentially the same as that of the butene based copolymers meaning they are both equally easy to extrude.

The broad molecular weight distribution of the HDPE polymer of the invention can also be expressed using its Mw/Mn. Thus the Mw/Mn of the HDPE polymer of the HDPE composition may be 10 or more, such as 10 to 60, preferably 12 to 40, especially 14 to 35.

The weight average molecular weight of preferred HDPE polymers of the HDPE composition is more than 50,000, the upper limit being e.g. 500,000, more preferably in the range 60,000 to 250,000, still more preferably 70,000 to 230000, especially 100,000 to 200,000. Its Mn may be in the range 3000 to 30,000, preferably 5000 to 15,000.

The HDPE polymer of the HDPE composition preferably has a crystalline melting point between 120 to 150°C (as determined by DSC analysis ISO 11357/03). The crystallinity of the HDPE polymer is preferably 55 to 90 % as determined by DSC analysis.

The amount of the hexene present in the HDPE may range from 1 to 5 wt%(as measured by FTIR). It is most preferred if the amount of hexene present is less than 4 wt%, more especially less than 3 wt%.

The LMW component of the HDPE polymer preferably has a density of more than 960 kg/cm³, preferably 960 to 980 kg/cm³, preferably 960 to 975 kg/m³. The LMW component preferably has a MFR₂ of 20 to 1000 g/10 min, preferably 30 to 800 g/10 min, still more preferably 30 to 500 g/10 min (ISO 1133 at 190°C under 2.16 kg load), for example 50 to 500 g/10 min. In a preferred embodiment the MFR₂ of the LMW component is at least 300 g/10min. The molecular weight of the LMW component is preferably in the range from 5,000 to 50,000, e.g. 20,000 to 40,000. Preferred molecular weight distribution values for the LMW component are 2 to 50, more preferably 4 to 30 (GPC).

The HMW component should have a lower MFR₂ and a lower density than the LMW component that is present in the HDPE polymer. The MFR₂ and density are such that the final HDPE polymer has the desired preset values. The weight average molecular weight of the HMW component preferably ranges from 150,000 to 500,000, e.g. 200,000 to 400,000.

The weight ratio between the LMW and HMW components (LMW:HMW) in the HDPE polymer of the invention is 10:90 to 90:10, preferably LMW:HMW of 40:60 to 60:40, more preferably 42:58 to 58:42.

As noted above, the mechanical and processing properties of the HDPE polymer of the invention are remarkable.

The tensile modulus of the HDPE of the invention may be at least 850 MPa, preferably at least 900 MPa, e.g. at least 925 MPa, more preferably at least 930 MPa, especially at least 940 MPa.

The ESCR-B of the HDPE of the invention may be at least 300h, preferably at least 320h, most preferably at least 325 h, especially at least 350 h, more especially at least 400 h.

The FNCT of the HDPE of the invention may be at least 30 h, preferably at least 35 h, especially at least 38h.

The high temperature (23°C) charpy impact strength of the HDPE of the invention may be at least 15 kJ/m², preferably at least 17 kJ/m², especially at least 20 kJ/m².

The low temperature (-20°C) charpy impact strength of the HDPE of the invention may be at least 8 kJ/m², preferably at least 9 kJ/m², especially at least 10 kJ/m².

All the properties discussed above can be measured as described in the examples section.

Most surprisingly the ESCR, tensile and impact properties of the polymers of the invention are much higher than those of otherwise identical polymers in which the copolymer component utilises hexene.

The HDPE polymer may comprise up to 10 % by weight of a well known polyethylene prepolymer (obtainable from a prepolymerisation step as well known in the art). If such a prepolymer is present it will form part of the LMW component.

Multimodal HDPE polymers for use in the invention are preferably prepared by forming the LMW and HMW components, in any order, in-situ in a sequential multistage process, for example, by two or more stage polymerisation using the same catalyst, or by the use of two or more different polymerisation catalysts and/or different polymerisation conditions in a one stage polymerisation. In principle any polymerisation method including solution, slurry and gas phase polymerisation can be used for producing the high density polyethylene polymer. The temperature in the polymerisation reactor needs to be sufficiently high to reach an acceptable activity of the catalyst. On the other hand, the temperature should not exceed the softening temperature of the polymer.

Preferably, however, at least the LMW and HMW components of the HDPE polymer are produced in a two or three stage polymerisation. Suitable polymerisation processes include liquid phase polymerisation, e.g. solution or slurry polymerization, preferably in the presence of a diluent (or optionally carried out in bulk), and a gas phase polymerisation.

In one preferable embodiment one of the above mentioned LMW and HMW components is polymerised as a slurry polymerisation (e.g. in a slurry tank or loop reactor) and the other as a slurry or gas phase, preferably gas phase, polymerisation (e.g. in a gas reactor), in any order.

Multimodal HDPE polymers for use in the present invention are preferably produced in such a reactor system. Particularly preferably the multimodal HDPE polymer is formed at least in a two stage process comprising a slurry loop polymerisation followed by a gas phase polymerization. A preferred loop reactor-gas phase reactor system usable in this invention is generally known as BORSTAR® reactor system. The multistage polymerization is preferably carried out using the same catalyst system in each stage. Moreover, the LMW component is preferably polymerised in the slurry reactor, preferably in a loop reactor, and the HMW component in the gas phase reactor in the presence of the reaction product of the slurry reactor.

The conditions used in such processes are well known. For slurry reactors, the reaction temperature will generally be in the range 60 to 110°C (e.g. 85-110 °C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100 °C. Preferred diluents include hydrocarbons such as propane or isobutane. Hydrogen is also preferably fed into the reactor to function as a molecular weight regulator.

If gas phase reactions are employed then conditions are preferably as follows:
- the temperature is within the range of 50°C to 130°C, preferably between 60°C and 115 °C,
- the pressure is within the range of 10 bar to 60 bar, preferably between 10 bar to 40 bar,
- hydrogen can be added for controlling the molar mass in a manner known per se,
- the residence time is typically 1 to 8 hours..

The gas used will commonly be a non-reactive gas such as nitrogen or low boiling point hydrocarbons such as propane together with monomer (e.g. ethylene).

If desired, the polymerisation may be effected in a known manner under supercritical conditions in the slurry, preferably loop reactor, and/or as a condensed mode in the gas phase reactor.

The gas phase polymerisation may be conducted in a manner known in the art, such as in a bed fluidised by gas feed or in mechanically agitated bed. Also fast fluidisation may be utilised.

Preferably, the lower molecular weight polymer fraction is produced in a continuously operating loop reactor where ethylene is polymerised in the presence of a polymerisation catalyst as stated below and a chain transfer agent such as hydrogen. The diluent is typically an inert aliphatic hydrocarbon, preferably isobutane or propane.

The higher molecular weight component can then be formed in a gas phase reactor, preferably using the same catalyst.

The multistage process wherein the LMW component as defined above is produced in a slurry process and the HMW component is produced in a gas phase reactor in the presence of the LMW component of the previous step, results in a particularly preferable combination.

The process is typically carried out as a continuous process.

A prepolymerisation step may be included in a well known manner before the above described actual polymerisation steps to provide the prepolymer component mentioned above.

The type of catalyst used is not critical. Preferably a coordination catalyst such as a Ziegler Natta catalyst or a single site catalyst (including well known metallocenes and non-metallocenes) is used.

In a preferred embodiment the multimodal HDPE polymer is prepared using a Ziegler Natta (ZN) catalyst, e.g. a conventional ZN catalyst.

Preferred Ziegler-Natta catalysts comprise a transition metal component and an activator. The transition metal component comprises a metal of Group 4 or 5 of the Periodic System (IUPAC) as an active metal. In addition, it may contain other metals or elements, like elements of Groups 2, 13 and 17. Preferably, the transition metal component is a solid. More preferably, it has been supported on a support material, such as inorganic oxide carrier or magnesium halide. Examples of such catalysts are given, among others in WO 95/35323, WO 01/55230, EP 810235 and WO 99/51646. The catalysts disclosed in WO 95/35323 are especially useful as they are well suited in production of both a polyethylene having a high molecular weight and a low molecular weight component. Thus, especially preferably the transition metal component comprises a titanium halide, a magnesium alkoxy alkyl compound and an aluminium alkyl dihalide supported on an inorganic oxide carrier.

In one embodiment a catalyst of Ziegler Natta type, wherein the active components are dispersed and solidified within a Mg-based support by an emulsion/solidification method adapted for polyethylene catalysts, e.g. as disclosed in WO03/106510 of Borealis is used, e.g. according to the principles given in the claims thereof.

In another preferable embodiment, the catalyst is a non-silica supported catalyst, i.e. the active components are not supported on an external silica support. Preferably, the support material of the catalyst is a Mg-based support material. Examples of such preferred Ziegler-Natta catalysts are described in EP 0 810 235. Multimodal (e.g. bimodal) polymers can also be made by mechanical blending of the polymer components in a known manner.

In a very preferable embodiment of the invention the polyethylene composition is produced using a ZN catalyst disclosed in EP 688794.

Conventional cocatalysts, supports, carriers, electron donors may also be used. Preferably the same catalyst is used throughout the polymerisation.

Where a metallocene catalyst is used, the preparation of the metallocenes can be carried out according or analogously to the methods known from the literature and is within skills of a person skilled in the field. Thus for the preparation see e.g. EP-A-129 368, examples of compounds wherein the metal atom bears a -NR"2 ligand see i.a. in WO-A-9856831 and WO-A-0034341. For the preparation see also e.g. in EP-A-260 130, WO-A-9728170, WO-A-9846616, WO-A-9849208, WO-A-9912981, WO-A-9919335, WO-A-9856831, WO-A-00/34341, EP-A-423 101 and EP-A-537 130.

The HDPE polymer of the invention is suitable for producing injection moulded and compression moulded articles in particular injection moulded articles, especially caps or closures. Injection and compression moulding are well known techniques in the art and will be readily carried out by the skilled man.

Compression moulding is a method of moulding in which the moulding material, generally preheated, is placed in an open, heated mould cavity. The mould is closed, pressure is applied to force the material into contact with all mould areas, and heat and pressure are maintained until the moulding procedure is complete.

Injection moulding is widely used to manufacture all manner of plastic items and is well known in the art. In injection moulding, granulated or powdered polymer is fed from a hopper into the Injection Moulding machine. The Injection Moulding apparatus consists of a hollow steel barrel, containing a rotating screw which carries the polymer along the barrel to the mould. Heaters surround the barrel melt the polymer as it travels along the barrel. The screw is forced back as the melted polymer collects at the end of the barrel and once enough polymer has collected a hydraulic ram pushes the screw forward injecting the plastic through a die into a mould cavity.

Pressure is maintained for a short time (dwell time) to prevent the material creeping back during setting (hardening). This prevents shrinkage. The moulded article is left to cool before being ejected.

Any injection moulded or compression moulded article can be made using the HDPE of the invention. In a highly preferred embodiment the article is a cap or closure, in particular a screw cap. This may be compression moulded but is preferably injection moulded.

It has also been surprisingly found that the organoleptic properties of the articles of the invention are not affected by the use of hexene. It is obviously vital for applications in the food and drink industries (e.g. for caps and closures) that the polymer material does not impart an unfavourable taste to the product being packaged. The person skilled in the art might expect that the use of hexene rather than butene would detrimentally affect the taste and odour of the material as higher olefin comonomers are associated with more taste and odour issues. Surprisingly, this does not occur. Rather the organoleptic properties of the HDPE are unchanged relative to a butene equivalent.

It goes without saying that the articles of the invention may comprise conventional additives such as antioxidants, heat stabilisers, slip agents, UV stabilisers, colourings, lubricants as well as polymer processing agent. It is also within the scope of the invention for the articles to contain other polymer components such as LDPE, LLDPE or other HDPE polymers. Preferably however the article consists essentially of the HDPE described herein, i.e. the HDPE is the only olefin polymer component but the presence of standard polymer additives is possible.

The invention will now be described further with reference to the following non-limiting examples.

### Analytical Test Method Descriptions

The following methods were used to measure the properties that are defined generally above and in examples below.

**Density** of the materials is measured according to ISO 1183:1987 (E), method D, with isopropanol-water as gradient liquid. The cooling rate of the plaques when crystallising the samples was 15 C/min. Conditioning time was 16 hours.

**MFR₂** is measured according to ISO 1133 at 190°C at load of 2.16 kg.

**MFR₅** is measured according to ISO 1133 at 190°C at load of 5 kg.

**MFR₂₁** is measured according to ISO 1133 at 190°C at load of 21.6 kg.

**FRR** is the ratio of MFR21/MFR2

**Comonomer content** was measured by FTIR

### Molecular weights and molecular weight distribution, Mn, Mw and MWD

were measured by Gel Permeation Chromatography (GPC) according to the following method:
The weight average molecular weight Mw and the molecular weight distribution (MWD = Mw/Mn wherein Mn is the number average molecular weight and Mw is the weight average molecular weight) is measured by a method based on ISO 16014-4:2003. A Waters 150CV plus instrument, equipped with refractive index detector and online viscosimeter was used with 3 x HT6E styragel columns from Waters (styrene-divinylbenzene) and 1,2,4-trichlorobenzene (TCB, stabilized with 250 mg/L 2,6-Di tert butyl-4-methyl-phenol) as solvent at 140 °C and at a constant flow rate of 1 mL/min. 500 µL of sample solution were injected per analysis. The column set was calibrated using universal calibration (according to ISO 16014-2:2003) with 15 narrow MWD polystyrene (PS) standards in the range of 1.0 kg/mol to 12 000 kg/mol. Mark Houwink constants were used for polystyrene and polyethylene (K: 9.54 x10⁻⁵ dL/g and a: 0.725 for PS, and K: 3.92 x10⁻⁴ dL/g and a: 0.725 for PE). All samples were prepared by dissolving 0.5 - 3.5 mg of polymer in 4 mL (at 140 °C) of stabilized TCB (same as mobile phase) and keeping for 3 hours at 140 °C and for another 1 hours at 160 °C with occasional shaking prior sampling in into the GPC instrument.

### Dynamic viscosity and Shear thinning index

Dynamic rheological measurements were carried out with a rheometer, namely Rheometrics RDA-II, on compression moulded samples under nitrogen atmosphere at 190 °C using 25 mm diameter plates and plate and plate geometry with a 1.2 mm gap. The oscillatory shear experiments were done within the linear viscosity range of strain at frequencies from 0.05 to 300 rad/s (ISO 6721-1). Five measurement points per decade are made.

The values of storage modulus (G'), loss modulus (G") complex modulus (G*) and complex viscosity (η*) were obtained as a function of frequency (ω). η₁₀₀ is used as abbreviation for the complex viscosity at the frequency of 100 rad/s. Shear thinning index (SHI), which correlates with MWD and is independent of M_{w}, was calculated according to Heino ("Rheological characterization of polyethylene fractions" Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and "The influence of molecular structure on some rheological properties of polyethylene", Heino, E.L., Borealis Polymers Oy, Porvoo, Finland, Annual Transactions of the Nordic Rheology Society, 1995.)

SHI value is obtained by calculating the complex viscosities η*(1.0 kPa) and η*(100 kPa) at a constant value of complex modulus of 1.0 kPa and 100 kPa, respectively. The shear thinning index SHI(1/100) is defined as the ratio of the two viscosities η*(1 kPa) and η*(100 kPa), i.e. η(1)/η(100).

### Stiffness (Tensile modulus)

Stiffness was measured on specimen (according to IS03167 - Multipurpose test specimen, type A (injected moulded)) according to ISO 527-2:1993. The modulus was measured at a speed of 1mm/min ( Testing speed of 5mm/min for brittle materials with an strain at break <10%).

### Spiral Test

Spiral Test is carried out using an Engel ES330/65 cc90 injection moulding apparatus with a spiral mould and pressure of 600, 1000 or 1400 bar screw diameter: 35 mm
max. piston displacement: 150 cm³
spec. injection pressure: 600, 1000, or 1400 bar
tool form: oval form; provided by Axxicon; thickness 2 mm, breadth: 5 mm temperature in pre-chamber and die: 230°C
temperature in zone 2/zone 3/zone 4/zone 5: 230°C/230°C/225°C/200°C
injection cycle: injection time including holding: 10 s
cooling time: 15 s
injection pressure: Follows from the predetermined length of the testing material, dwell pressure = injection pressure
screw speed: 30 rpm
system pressure: 10 bar
metering path: should be chosen so that the screw stops 20 mm before its final position at the end of the dwell pressure,
tool temperature: 40°C

The spiral flow length can be determined immediately after the injection operation.

### ESCR

Environmental Stress Crack Resistance (ESCR) F50 was determined in hours according to ASTM 1693, condition B, at 50°C and using 10% Igepal co-630. Measured on 2 mm compression moulded samples.

### FNCT

Full notch Creep test (FNCT) was measured according to ISO/DIS 16770.3 at 50°C and 6 MPa stress with a notch depth of 1mm and compression moulded specimen dimensions 90 mm x 6 mm x 6 mm. The solvent used was 2 vol% Arkopal N110 in deionized water.

### Charpy impact strength

Charpy impact strength was determined according to ISO 179:2000 on V-notched samples at 23°C (Charpy impact strength (23°C)) and -20°C (Charpy impact strength (-20°C)). The samples were produced by injection moulding.

### Organoleptics:

Smell tests were carried out by an Independent sensory analysis company following ISO 8587: 1988. 40 g samples of the polymers were heated with 600 ml of Evian water at 30°C and 60°C for 4 hours and left to stand overnight. Pure Evian was used as a reference. The samples were analysed by a trained sensory panel for "plastic flavour" following the methodology of ISO 8587: 1988. No difference between samples at 30 and 60°C was found so these results are not presented separately.

### Example 1

### General Protocols

The first stage of the polymerisations below was carried out in a 500 dm³ loop reactor in the presence of ethylene, propane and hydrogen in the amounts specified in table 2. The polymer containing active catalyst was separated from the reaction medium and transferred to a gas phase reactor operated at 20 bar pressure where additional ethylene, hydrogen and comonomer were added (Table 3).

The catalyst used was that of Example 3 of EP-B-688794 (loaded on 20 micron silica) with triethyl aluminium as cocatalyst.

### Catalyst Preparation:

Complex Formation: 87 kg toluene was added to a reactor. Then 45.5 kg 20.3% BOMAG-A in heptane was also added in the reactor. 161 kg 99.8% 2-ethyl-1-hexanol was fed in the reactor at the speed of 24 - 40 kg/h. The molar ratio between BOMAG-A and 2-ethyl-1-hexanol was 1:1.83.

275 kg silica (Grace 955) activated at 600°C was charged into a reactor. 411 kg 20% EADC (2.0 mmol/g Si) diluted in 555 1 pentane was added to the reactor at ambient temperature during 1 h. The temperature was increased to 35°C. The treated silica was stirred for 1 h. The treated silica was dried at 50°C for 8.5 h. 655 kg of the complex (2 mmol Mg/g Si) prepared above was added at 23° C during 10 min. 86 kg pentane was added into the reactor at 22°C during 10 min. The slurry was stirred for 8 h at 50°C. Finally 52 kg TiCl₄ was added during 0.5 h at 45°C. The slurry was stirred at 40°C for 5 h. The catalyst was dried under nitrogen purge.

The composition of the dry catalyst was 2.4% Ti, 2.3% Mg, 14.1 % C1 and 2.9% Al.

For Sample 1 and the reference material C1, the catalyst was prepolymerised using the following conditions.

**Prepolymerisation Conditions: Table 1**

| | | |
|---|---|---|
| Temperature | °C | 70 |
| Pressure | bar | 63 |
| C₂ feed | Kg/h | 2 |
| C₃ feed | Kg/h | 43 |
| H₂ feed | g/h | 5.2 |
| Cat feed | g/h | 14 |

For sample 2, no prepolymerisation reaction was employed.

**Table 2 Polymerisation Conditions: Loop reactor**

| **Sample** | | S1 | S2 | C1 |
|---|---|---|---|---|
| Temperature | °C | 95 | 95 | 95 |
| Pressure | Bar | 58 | 58 | 58 |
| Cat feed | g/h | 14.3 | 8.9 | 14.0 |
| Cocat feed | g/h | 6.0 | 6.0 | 6.0 |
| C₂ feed | kg/h | 45.4 | 44.1 | 44.4 |
| C₃ feed | kg/h | 89.8 | 82.6 | 88.7 |
| H₂ feed | g/h | 133 | 120 | 132 |
| [C₂] | mol% | 6.6 | 5.8 | 6.8 |
| H₂/C₂ ratio | mol/kmol | 358 | 398 | 347 |
| Prod | Kg/g | 2.9 | 4.6 | 2.9 |
| Split | % | 54.7 | 53.6 | 53.3 |
| MFR₂hd | g/10min | 500 | 400 | 422 |
| density | kg/m³ | >965 | >965 | >965 |

**Table 3 Polymerisation Conditions: Gas Phase reactor**

| | | S1 | S2 | C1 |
|---|---|---|---|---|
| Temperature | °C | 85 | 85 | 85 |
| pressure | bar | 20 | 20 | 20 |
| C₂ feed | kg/h | 44 | 45 | 43 |
| H₂ feed | g/h | 12.9 | 17.7 | 15.1 |
| C₄ feed | kg/h | | | 1.6 |
| C₆ feed | kg/h | 1.2 | 1.9 | |
| C₂ concentration | mol% | 9.5 | 9.5 | 8.8 |
| C₂ partial pressure | bar | 1.9 | 1.9 | 1.8 |
| H₂/C₂ ratio | mol/kmol | 65 | 80 | 81 |
| C₄/C₂ ratio | mol/kmol | | | 80 |
| C₆/C₂ ratio | mol/kmol | 27 | 52 | |
| ethylene concentration | mol% | 9.49 | 9.49 | 8.78 |
| productivity | kg/g | 5.3 | 8.6 | 5.4 |
| split | wt-% | 45.3 | 46.4 | 46.7 |

The reactor powder formed was then extruded under standard conditions and 1500 ppm AKCROPAK OP 104 added.

The Properties of the polymers formed were then measured using the techniques mentioned above and are presented in table 4.

**Table 4: Properties of formed HDPE**

| | Unit | Invention | | Reference |
|---|---|---|---|---|
| Final | | S 1 | S2 | C1 |
| MFR₂ | g/10min | 1.1 | 1.4 | 1.4 |
| MFR5 | g/10min | 3.90 | 5.00 | 5.10 |
| MFR21 | g/10min | 75.0 | 93.0 | 98.0 |
| Density | kg/m³ | 956.7 | 955 | 955.3 |
| C4 (final prod.) | wt% | | | 0.9 |
| C6 (final prod.) | wt% | 2.9 | 2.8 | |
| Mw | kD | 140 | 125 | 130 |
| Mn | kD | 6,4 | 8,1 | 7,8 |
| MWD | | 22 | 15 | 17 |
| Tensile modulus | MPa | 955 | 930 | 920 |
| FNCT (6MPa, 50°C) | h | 39 | 43 | 26 |
| ESCR-B | h | 330 | 450 | 310 |
| Charpy impact 23°C | kJ/m² | 23 | 20 | 14 |
| Charpy impact -20° | kJ/m² | 11 | 9.7 | 7.7 |
| Spiral flow, 600 bar, 230°C | cm | 27.7 | 29 | 29.9 |
| Spiral flow, 1000 bar, 230°C | cm | 40.1 | 41.7 | 43.2 |
| Spiral flow, 1400 bar, 230°C | cm | 51.5 | 53.1 | 56.9 |
| SHI1/100 | | 11 | 10 | 11 |

Organoleptic results are presented in Table 5

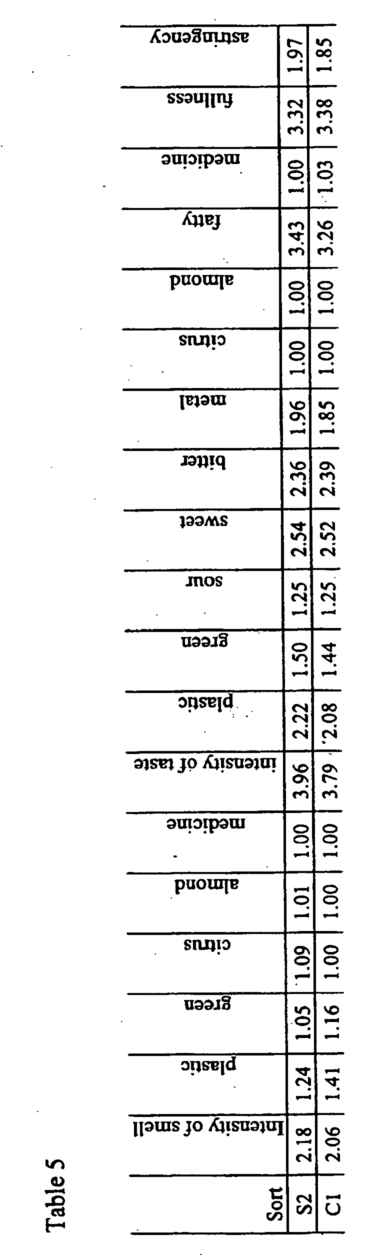

### Example 2

### Injection Moulded Screw Caps

Samples 1 and 2 are injection moulded to form screw caps.

Injection moulding takes place in a 120 t Nestal Synergy injection moulding machine employing the conditions below.

Cap Injection Moulding conditions:
Melt temperature: 215°C
Holding Pressure: 825 bar
Holding Time: 1.0 s
Cooling time: 0.7 s
Cycle Time: 3.7 s

## Claims

1. An injection moulded or compression moulded article comprising a multimodal high density ethylene hexene copolymer (HDPE) containing at least a lower molecular weight (LMW) polyethylene homopolymer component and a higher molecular weight (HMW) ethylene hexene copolymer component;
wherein said HDPE has a MFR₂ of 0.1 to 20 g/10min when determined according to ISO 1133 at 190°C at load of 2.16 kg;
a density of 945 to 975 kg/m³;
a tensile modulus of at least 850 MPa;
a high temperature (23°C) charpy impact strength of at least 15 kJ/m²;
and
an ESCR-B of at least 300h.

2. An article as claimed in any preceding claim in which said HDPE has a density of 955 to 957 kg/m³.

3. An article as claimed in any preceding claim wherein said HDPE has a MFR₂ of 1.0 to 1.5 g/10min.

4. An article as claimed in any preceding claim in which said HDPE has a Spiral test (600 bar) value of 20 to 50 cm.

5. An article as claimed in any preceding claim in which said HDPE has a Spiral test (1000 bar) value of 3 0 to 70 cm.

6. An article as claimed in any preceding claim in which said HDPE has a Spiral test (1400 bar) value of 40 to 90 cm.

7. An article as claimed in any preceding claim in which said HDPE has an Mw/Mn of 14 to 35.

8. An article as claimed in any preceding claim in which said HDPE has a tensile modulus of at least 925 MPa.

9. An article as claimed in any preceding claim in which said HDPE has an ESCR-B of at least 325 h.

10. An article as claimed in any preceding claim in which said HDPE has an FNCT of at least 30 h.

11. An article as claimed in any preceding claim in which said HDPE has a low temperature (-20°C) charpy impact strength of the HDPE of at least 8 kJ/m².

12. An article as claimed in any preceding claim in which said HDPE has a hexene content of less than 3 wt%.

13. An article as claimed in any preceding claim in which said HDPE is bimodal.

14. An article as claimed in any preceding claim being a cap or closure, especially a screw cap.

## Patentansprüche

1. Spritzguß- oder Formpreßgegenstand, umfassend ein multimodales Ethylen-Hexen-Copolymer hoher Dichte (HDPE), das zumindest eine Polyethylenhomopolymer-Komponente mit geringerem Molekulargewicht (LMW) und eine Ethylen-Hexen-Copolymer-Komponente mit höherem Molekulargewicht (HMW) enthält; wobei das HDPE einen MFR₂-Wert von 0,1 bis 20 g/10 min, wenn dieser gemäß ISO 1133 bei 190°C und einer Last von 2,16 kg bestimmt wird;
eine Dichte von 945 bis 975 kg/m³,
einen Zugmodul von mindestens 850 MPa,
eine Kerbschlagzähigkeit gemäß Charpy bei hoher Temperatur (23°C) von mindestens 15 kJ/m² und
einen ESCR-B-Wert von mindestens 300 h hat.

2. Gegenstand nach einem der vorstehenden Ansprüche, wobei das HDPE eine Dichte von 955 bis 957 kg/m³ aufweist.

3. Gegenstand nach einem der vorstehenden Ansprüche, wobei das HDPE einen MFR₂-Wert von 1,0 bis 1,5 g/10 min aufweist.

4. Gegenstand nach einem der vorstehenden Ansprüche, wobei das HDPE einen Wert beim Spiraltest (600 bar) von 20 bis 50 cm aufweist.

5. Gegenstand nach einem der vorstehenden Ansprüche, wobei das HDPE einen Wert beim Spiraltest (1000 bar) von 30 bis 70 cm aufweist.

6. Gegenstand nach einem der vorstehenden Ansprüche, wobei das HDPE einen Wert beim Spiraltest (1400 bar) von 40 bis 90 cm aufweist.

7. Gegenstand nach einem der vorstehenden Ansprüche, wobei das HDPE ein Mw/Mn von 14 bis 35 aufweist.

8. Gegenstand nach einem der vorstehenden Ansprüche, wobei das HDPE einen Zugmodul von mindestens 925 MPa aufweist.

9. Gegenstand nach einem der vorstehenden Ansprüche, wobei das HDPE einen ESCR-B-Wert von mindestens 325 h aufweist.

10. Gegenstand nach einem der vorstehenden Ansprüche, wobei das HDPE einen FNCT-Wert von mindestens 30 h aufweist.

11. Gegenstand nach einem der vorstehenden Ansprüche, wobei das HDPE eine Kerbschlagzähigkeit gemäß Charpy bei einer niedrigen Temperatur (-20°C) des HDPE von mindestens 8 kJ/m² aufweist.

12. Gegenstand nach einem der vorstehenden Ansprüche, wobei das HDPE einen Hexengehalt von weniger als 3 Gew.-% aufweist.

13. Gegenstand nach einem der vorstehenden Ansprüche, wobei das HDPE bimodal ist.

14. Gegenstand nach einem der vorstehenden Ansprüche, der eine Kappe oder ein Verschluß, insbesondere eine Schraubkappe ist.

## Revendications

1. Article moulé par injection ou moulé par compression comprenant un copolymère multimodal d'éthylène-hexène haute densité (HDPE) contenant au moins un composant homopolymère de polyéthylène de bas poids moléculaire (LMW) et un composant copolymère d'éthylène-hexène de poids moléculaire plus élevé (HMW) ;
dans lequel ledit HDPE a un indice de fluidité à chaud MFR₂ de 0,1 à 20 g/10 min, selon ISO 1133 à 190 °C sous une charge de 2,16 kg;
une densité de 945 à 975 kg/m³ ;
un module en traction d'au moins 850 MPa ;
une résistance au choc Charpy à haute température (23 °C) d'au moins 15 kJ/m² ;
et
une résistance à la fissuration sous contrainte, ESCR-B, d'au moins 300 h.

2. Article selon la revendication précédente, dans lequel ledit HDPE a une densité de 955 à 957 kg/m³.

3. Article selon l'une quelconque des revendications précédentes, dans lequel ledit HDPE a un indice de fluidité à chaud MFR₂ de 1,0 à 1,5 g/10 min.

4. Article selon l'une quelconque des revendications précédentes, dans lequel ledit HDPE a une valeur au test de la spirale (600 bars) de 20 à 50 cm.

5. Article selon l'une quelconque des revendications précédentes, dans lequel ledit HDPE a une valeur au test de la spirale (1000 bars) de 30 à 70 cm.

6. Article selon l'une quelconque des revendications précédentes, dans lequel ledit HDPE a une valeur au test de la spirale (1400 bars) de 40 à 90 cm.

7. Article selon l'une quelconque des revendications précédentes, dans lequel ledit HDPE a un rapport Mw/Mn de 14 à 35.

8. Article selon l'une quelconque des revendications précédentes, dans lequel ledit HDPE a un module en traction d'au moins 925 MPa.

9. Article selon l'une quelconque des revendications précédentes, dans lequel ledit HDPE a une résistance à la fissuration sous contrainte ESCR-B d'au moins 325 h.

10. Article selon l'une quelconque des revendications précédentes, dans lequel ledit HDPE a une valeur à l'essai sur éprouvette entièrement entaillée, FNCT, d'au moins 30 h.

11. Article selon l'une quelconque des revendications précédentes, dans lequel ledit HDPE a une résistance au choc Charpy à basse température (-20 °C) d'au moins 8 kJ/m².

12. Article selon l'une quelconque des revendications précédentes, dans lequel ledit HDPE a une teneur en hexène inférieure à 3 % en poids.

13. Article selon l'une quelconque des revendications précédentes, dans lequel ledit HDPE est bimodal.

14. Article selon l'une quelconque des revendications précédentes qui est un bouchon ou un dispositif de fermeture, notamment un bouchon vissant.
